# EUROPEAN PATENT APPLICATION

(11) **EP 4 727 254 A1**
(43) Date of publication of application: **15.04.2026**
(21) Application number: 25744419.0
(22) Date of filing: 03.01.2025
(51) Int. Cl.: H04W 76/14

(54) **COMMUNICATION METHOD AND COMMUNICATION APPARATUS**

(30) Priority: 22.01.2024 CN 202410086706
(71) Applicant: Huawei Technologies Co., Ltd., Shenzhen, Guangdong 518129 (CN)
(72) Inventor: WANG, Chunfeng, Shenzhen, Guangdong 518129 (CN)
(74) Representative: Thun, Clemens
(86) International application number: PCT/CN2025/070436
(87) International publication number: WO 2025/156973

(57) **Abstract**

This application provides a communication method and a communication apparatus. The method includes: A transmit end device receives a first packet from a receive end device via a router, where the first packet includes a first field that indicates signal strength of the receive end device, and further includes a second field that indicates signal strength of the router. The transmit end device determines a distance between the receive end device and the router based on the first field, determines a distance between the router and the transmit end device based on the second field, and establishes a signaling connection to the receive end device through a local area network when the foregoing two distances meet a specific condition. In addition, when a distance between the transmit end device and the receive end device meets a specific condition, the transmit end device establishes a data connection to the receive end device in a point-to-point manner. According to the communication method and the communication apparatus in this application, a success rate of establishing a signaling connection by an electronic device through a local area network can be ensured as much as possible, and a success rate of establishing a data connection in a point-to-point manner can be ensured as much as possible.

## Description

This application claims priority to Chinese Patent Application No. 202410086706.8, filed with the China National Intellectual Property Administration on January 22, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

An electronic device in a current distributed service may generally search for a peripheral device by using a constrained application protocol (constrained application protocol, CoAP) medium or a Bluetooth low energy (Bluetooth low energy, BLE) medium. Searching for a peripheral device by using the CoAP medium by the electronic device is a search manner in a local area network scenario, and searching for a peripheral device by using the BLE medium by the electronic device is a search manner in a non-local area network scenario. Rates of searching by using the foregoing two media are different.

Generally, a peripheral device may be found quickly by using the CoAP medium to complete a discovery process, and a signaling connection is established to the peripheral device. In addition, because service transmission in a high-speed wireless fidelity (wireless fidelity, Wi-Fi) connection manner is highly efficient, after the signaling connection is established, a high-speed Wi-Fi connection may be usually established between electronic devices.

Although the electronic devices may discover each other quickly by using a CoAP medium in a local area network, it is unknown whether the electronic devices that discover each other can still establish a signaling connection by using the CoAP. If the CoAP is used blindly, establishment of the signaling connection may fail. In addition, even if the electronic devices successfully establish the signaling connection by using the CoAP, it is still possible that the high-speed Wi-Fi connection fails to be established.

Therefore, how to ensure, as much as possible, a success rate of establishing a signaling connection by an electronic device through a local area network and a success rate of establishing a high-speed Wi-Fi connection is a problem that urgently needs to be resolved currently.

### SUMMARY

This application provides a communication method and a communication apparatus. The method can ensure, as much as possible, a success rate of establishing a signaling connection by an electronic device through a local area network, and ensure a success rate of establishing a high-speed Wi-Fi connection.

According to a first aspect, a communication method is provided, where the method is applied to a first electronic device, and the method includes: receiving a first packet from a second electronic device via a router, where the first packet includes a first field, and the first field indicates signal strength of the second electronic device; and determining a first parameter based on the first field, where the first parameter indicates a distance between the second electronic device and the router.

For example, the first packet is a feedback packet of a discovery packet. Before determining the first packet, the second electronic device receives the discovery packet from the first electronic device. When the first electronic device receives, from the second electronic device, the feedback packet of the discovery packet, the first electronic device and the second electronic device discover each other. The discovery packet of the first electronic device is a broadcast packet, and the first packet (the feedback packet of the discovery packet) is an unicast packet. The first electronic device may be understood as a transmit end device, and the second electronic device may be understood as a receive end device.

It should be noted that, in a local area network scenario, a router needs to be used to forward a packet to implement a mutual discovery process between the first electronic device and the second electronic device by discovering a constrained application protocol (constrained application protocol, CoAP) medium with a low delay.

For example, the first field is a received signal strength indicator (received signal strength indicator, RSSI) field. Before sending the first packet, the second electronic device may add an RSSI field to the first packet.

According to the foregoing solution, the first electronic device may determine the distance between the second electronic device and the router based on the first field in the feedback packet of the discovery packet, to subsequently determine a specific manner of establishing the signaling connection, improve a success rate of establishing signaling, and avoid a waste of resources.

With reference to the first aspect, in some implementations of the first aspect, the first packet further includes a second field, the second field indicates signal strength of the router, and the method further includes: determining a second parameter based on the second field, where the second parameter indicates a distance between the router and the first electronic device.

It should be noted that the first packet received by the first electronic device is forwarded via the router, and before the router forwards the first packet to the first electronic device, the second field may be carried in the first packet, where the second field may be an RSSI field. The first electronic device may calculate the distance between the router and the first electronic device based on the signal strength that is of the router and that is indicated by the RSSI field.

For example, the first field may be carried at a tail of the first packet, and the second field may be carried at a header of the first packet.

According to the foregoing solution, the first electronic device may determine the distance between the first electronic device and the router based on the second field in the feedback packet of the discovery packet, to subsequently determine a specific manner of establishing the signaling connection, improve a success rate of establishing signaling, and avoid a waste of resources.

With reference to the first aspect, in some implementations of the first aspect, the method further includes: when the first parameter and the second parameter meet a first preset condition, establishing a signaling connection to the second electronic device through a local area network.

For example, the first preset condition may be understood as that a distance that is between devices and that is indicated by a parameter meets a condition for establishing a signaling connection through a local area network.

It should be noted that, before the first electronic device establishes the signaling connection to the second electronic device through the local area network, it needs to be first determined whether each communication link for establishing the signaling connection through the local area network meets a condition for establishing a signaling connection. The first electronic device determines whether the distance indicated by the first parameter and the distance indicated by the second parameter meet the condition for establishing the signaling connection through the local area network. In other words, the first electronic device determines whether a path between the first electronic device and the router and a path between the router and the second electronic device meet the condition for establishing the signaling connection through the local area network.

In other words, when the signal strength of the second electronic device and the signal strength of the router meet the condition for establishing the signaling connection through the local area network, the signaling connection to the second electronic device may be established through the local area network.

Generally, when the distance indicated by the first parameter is close enough to the distance indicated by the second parameter, the first electronic device and the second electronic device are suitable to establish the signaling connection through the local area network.

In an implementation, when the first parameter or the second parameter does not meet the first preset condition, a signaling connection to the second electronic device is established through a non-local area network.

Generally, when either of the distance indicated by the first parameter or the distance indicated by the second parameter is long, the first electronic device may fail to establish the signaling connection to the second electronic device through the local area network. The first electronic device may attempt to establish the signaling connection to the second electronic device through the non-local area network, for example, establish a signaling connection by using a Bluetooth low energy (Bluetooth low energy, BLE) medium.

According to the foregoing solution, when the first parameter and the second parameter meet the specific condition, the first electronic device establishes the signaling connection to the second electronic device through the local area network, to avoid a possibility that a failure occurs when a blind attempt is made to establish the signaling connection through the local area network, and reduce a waste of resources.

With reference to the first aspect, in some implementations of the first aspect, the first packet is a feedback packet of a discovery packet.

With reference to the first aspect, in some implementations of the first aspect, the first field is a received signal strength indicator RSSI field.

With reference to the first aspect, in some implementations of the first aspect, the method further includes: obtaining a third parameter, where the third parameter indicates a distance between the first electronic device and the second electronic device; and when the third parameter meets a second preset condition, establishing a data connection to the second electronic device in a point-to-point manner.

For example, the second preset condition may be understood as that a distance that is between devices and that is indicated by a parameter meets a condition for establishing a signaling data connection in a point-to-point manner.

It should be noted that, after establishing the signaling connection to the second electronic device through the local area network, the first electronic device first determines whether a communication link between the first electronic device and the second electronic device meets a condition for point-to-point service transmission, and if the communication link meets the condition, establishes the data connection in the point-to-point manner.

It should be understood that, when the first electronic device establishes the signaling connection to the second electronic device through the local area network, it indicates that the distance between the first electronic device and the router, and the distance between the router and the second electronic device are close enough. However, the distance between the first electronic device and the second electronic device affects the success rate of establishing the data connection in the point-to-point manner. Therefore, it needs to be determined in advance whether the distance between the first electronic device and the second electronic device meets the condition of establishing the data connection in the point-to-point manner.

According to the foregoing solution, when the third parameter meets a specific condition, the first electronic device establishes the data connection to the second electronic device in the point-to-point manner, to avoid a possibility that a failure occurs when a blind attempt is made to establish the data signaling connection in the point-to-point manner, and reduce a waste of resources.

With reference to the first aspect, in some implementations of the first aspect, obtaining the third parameter includes: obtaining the third parameter based on one of the following: a Bluetooth signal, an ultrasonic signal, a radio carrier communication technology UWB technology, and near field communication NFC.

For example, the distance between the first electronic device and the second electronic device is determined based on a balance attenuation value of a Bluetooth RSSI. If the distance is excessively long, it indicates that the near-field point-to-point data connection is not suitable for establishment.

For example, the point-to-point communication manner includes Wi-Fi P2P communication or Huawei magneto link (Huawei magneto link, HML) communication.

It should be noted that service transmission may be directly performed between the first electronic device and the second electronic device that establish the data connection in the point-to-point manner. In this transmission manner, a transmission rate is high, and transmission efficiency is high.

In an implementation, when the third parameter does not meet the second preset condition, the first electronic device establishes the data connection to the second electronic device through the local area network.

For example, a service or data transmitted between the first electronic device and the second electronic device needs to be forwarded via the router.

According to a second aspect, a communication method is provided, where the method is applied to a first electronic device, the first electronic device and a second electronic device discover each other, and the method includes: sending a second packet to the second electronic device; receiving, from the second electronic device, a feedback packet of the second packet; and when a round-trip time RTT of the second packet meets a first preset condition, establishing a signaling connection to the second electronic device through a local area network.

For example, the second packet may be a probe packet.

It should be understood that, after the first electronic device and the second electronic device discover each other, whether the signaling connection can be established through the local area network may be further determined based on the probe packet.

It should be noted that the probe packet is transmitted between the first electronic device and the second electronic device, and the feedback packet of the probe packet needs to be forwarded via a router. Therefore, the RTT may reflect a communication status of a channel between the first electronic device and the router and a communication status of a channel between the router and the second electronic device.

For example, if the RTT of the probe packet is low and an experiential delay is met, the first electronic device may establish the signaling connection to the second electronic device through the local area network. If the RTT of the probe packet is high and an experiential delay is not met, the first electronic device may establish the signaling connection to the second electronic device through the non-local area network.

According to the foregoing solution, the first electronic device may determine, based on the RTT of the probe packet, the communication status of the channel between the first electronic device and the router and the communication status of the channel between the router and the second electronic device. When a specific condition is met, the first electronic device establishes the signaling connection to the second electronic device through the local area network, to avoid a possibility that a failure occurs when a blind attempt is made to establish the signaling connection through the local area network, and reduce a waste of resources.

With reference to the second aspect, in some implementations of the second aspect, sending the second packet to the second electronic device includes: receiving a third packet from the second electronic device; determining an unicast address of the second electronic device based on the third packet; and sending the second packet to the second electronic device based on the unicast address of the second electronic device.

It should be noted that, after the first electronic device and the second electronic device discover each other, the first electronic device may determine the unicast address of the second electronic device based on the feedback packet of the discovery packet unicast by the second electronic device, and unicast the probe packet to the second electronic device based on the unicast address of the second electronic device.

With reference to the second aspect, in some implementations of the second aspect, the third packet is a feedback packet of a discovery packet.

With reference to the second aspect, in some implementations of the second aspect, the method further includes: obtaining a third parameter, where the third parameter indicates a distance between the first electronic device and the second electronic device; and when the third parameter meets a second preset condition, establishing a data connection to the second electronic device in a point-to-point manner.

For example, the second preset condition may be understood as that a distance that is between devices and that is indicated by a parameter meets a condition for establishing a signaling data connection in a point-to-point manner.

According to the foregoing solution, when the third parameter meets a specific condition, the first electronic device establishes the data connection to the second electronic device in the point-to-point manner, to avoid a possibility that a failure occurs when a blind attempt is made to establish the data signaling connection in the point-to-point manner, and reduce a waste of resources.

With reference to the second aspect, in some implementations of the second aspect, obtaining the third parameter includes: obtaining the third parameter based on one of the following: a Bluetooth signal, an ultrasonic signal, a radio carrier communication technology UWB technology, and near field communication NFC.

According to a third aspect, a communication method is provided, where the method is applied to a second electronic device, and the method includes: determining a first packet, where the first packet includes a first field; and sending the first packet to a first electronic device via a router, where the first field is used by the first electronic device to determine a first parameter, and the first parameter indicates a distance between the second electronic device and the router.

For example, the first packet is a feedback packet of a discovery packet. Before determining the first packet, the second electronic device receives the discovery packet from the first electronic device. When the first electronic device receives, from the second electronic device, the feedback packet of the discovery packet, the first electronic device and the second electronic device discover each other. The discovery packet of the first electronic device is a broadcast packet, and the first packet (the feedback packet of the discovery packet) is an unicast packet. The first electronic device may be understood as a transmit end device, and the second electronic device may be understood as a receive end device.

It should be noted that, in a local area network scenario, the router needs to be used to forward a packet to implement a mutual discovery process between the first electronic device and the second electronic device by discovering a CoAP medium with a low delay.

For example, the first field is a received signal strength indicator (received signal strength indicator, RSSI) field. Before sending the first packet, the second electronic device may add an RSSI field to the first packet.

According to the foregoing solution, the second electronic device may add the first field to the feedback packet of the discovery packet, so that the first electronic device can determine the distance between the second electronic device and the router based on the first field, to subsequently determine a specific manner of establishing a signaling connection, improve a success rate of establishing signaling, and avoid a waste of resources.

With reference to the third aspect, in some implementations of the third aspect, the method further includes: establishing a signaling connection to the first electronic device through a local area network, where a distance between the first electronic device and the router is a second parameter, and the first parameter and the second parameter meet a first preset condition.

For example, the first preset condition may be understood as that a distance that is between devices and that is indicated by a parameter meets a condition for establishing a signaling connection through a local area network.

It should be noted that, before the first electronic device establishes the signaling connection to the second electronic device through the local area network, it needs to be first determined whether each communication link for establishing the signaling connection through the local area network meets a condition for establishing a signaling connection. When signal strength of the second electronic device and signal strength of the router meet the condition for establishing the signaling connection through the local area network, the signaling connection to the first electronic device may be established through the local area network.

Generally, when the distance indicated by the first parameter is close enough to the distance indicated by the second parameter, the first electronic device and the second electronic device are suitable to establish the signaling connection through the local area network.

In an implementation, when the first parameter or the second parameter does not meet the first preset condition, the second electronic device establishes a signaling connection to the first electronic device through a non-local area network

Generally, when either of the distance indicated by the first parameter or the distance indicated by the second parameter is long, the first electronic device may fail to establish the signaling connection to the second electronic device through the local area network. The first electronic device may attempt to establish the signaling connection to the second electronic device through the non-local area network, for example, establish a signaling connection by using a Bluetooth low energy (Bluetooth low energy, BLE) medium.

According to the foregoing solution, when the first parameter and the second parameter meet the specific condition, the first electronic device establishes the signaling connection to the second electronic device through the local area network, to avoid a possibility that a failure occurs when a blind attempt is made to establish the signaling connection through the local area network, and reduce a waste of resources.

With reference to the third aspect, in some implementations of the third aspect, the first packet is a feedback packet of a discovery packet.

With reference to the third aspect, in some implementations of the third aspect, the first field is a received signal indicator RSSI field.

With reference to the third aspect, in some implementations of the third aspect, the method further includes: when a third parameter meets a second preset condition, establishing a data connection to the first electronic device in a point-to-point manner, where the third parameter indicates a distance between the second electronic device and the first electronic device.

For example, the second preset condition may be understood as that a distance that is between devices and that is indicated by a parameter meets a condition for establishing a signaling data connection in a point-to-point manner.

It should be noted that, after establishing the signaling connection to the second electronic device through the local area network, the first electronic device first determines whether a communication link between the first electronic device and the second electronic device meets a condition for point-to-point service transmission, and if the communication link meets the condition, establishes the data connection in the point-to-point manner.

It should be understood that, when the first electronic device establishes the signaling connection to the second electronic device through the local area network, it indicates that the distance between the first electronic device and the router, and the distance between the router and the second electronic device are close enough. However, the distance between the first electronic device and the second electronic device affects the success rate of establishing the data connection in the point-to-point manner. Therefore, it needs to be determined in advance whether the distance between the first electronic device and the second electronic device meets the condition of establishing the data connection in the point-to-point manner.

According to the foregoing solution, when the third parameter meets a specific condition, the first electronic device establishes the data connection to the second electronic device in the point-to-point manner, to avoid a possibility that a failure occurs when a blind attempt is made to establish the data signaling connection in the point-to-point manner, and reduce a waste of resources.

According to a fourth aspect, a communication method is provided, where the method is applied to a second electronic device, the second electronic device and a first electronic device discover each other, and the method includes: receiving a second packet from the first electronic device; sending a feedback packet of the second packet to the first electronic device; and when a round-trip time RTT of the second packet meets a first preset condition, establishing a signaling connection to the first electronic device through a local area network.

For example, the second packet may be a probe packet.

It should be understood that, after the first electronic device and the second electronic device discover each other, whether the signaling connection can be established through the local area network may be further determined based on the probe packet.

It should be noted that the probe packet is transmitted between the first electronic device and the second electronic device, and the feedback packet of the probe packet needs to be forwarded via a router. Therefore, the RTT may reflect a communication status of a channel between the first electronic device and the router and a communication status of a channel between the router and the second electronic device.

For example, if the RTT of the probe packet is low and an experiential delay is met, the first electronic device may establish the signaling connection to the second electronic device through the local area network. If the RTT of the probe packet is high and an experiential delay is not met, the first electronic device may establish the signaling connection to the second electronic device through the non-local area network.

According to the foregoing solution, the first electronic device may determine, based on the RTT of the probe packet, the communication status of the channel between the first electronic device and the router and the communication status of the channel between the router and the second electronic device. When a specific condition is met, the first electronic device establishes the signaling connection to the second electronic device through the local area network, to avoid a possibility that a failure occurs when a blind attempt is made to establish the signaling connection through the local area network, and reduce a waste of resources.

With reference to the fourth aspect, in some implementations of the fourth aspect, receiving the second packet from the first electronic device includes: sending a third packet to the first electronic device, where the third packet is used by the first electronic device to determine an unicast address of the second electronic device; and receiving the second packet from the first electronic device based on the unicast address of the second electronic device.

It should be noted that, after the first electronic device and the second electronic device discover each other, the feedback packet of the discovery packet sent by the second electronic device may carry the unicast address of the second electronic device, so that the first electronic device unicasts the probe packet to the second electronic device based on the unicast address.

With reference to the fourth aspect, in some implementations of the fourth aspect, the third packet is a feedback packet of a discovery packet.

With reference to the fourth aspect, in some implementations of the fourth aspect, the method further includes: when a third parameter meets a second preset condition, establishing a data connection to the first electronic device in a point-to-point manner, where the third parameter indicates a distance between the second electronic device and the first electronic device.

For example, the second preset condition may be understood as that a distance that is between devices and that is indicated by a parameter meets a condition for establishing a signaling data connection in a point-to-point manner.

According to the foregoing solution, when the third parameter meets a specific condition, the first electronic device establishes the data connection to the second electronic device in the point-to-point manner, to avoid a possibility that a failure occurs when a blind attempt is made to establish the data signaling connection in the point-to-point manner, and reduce a waste of resources.

According to a fifth aspect, a communication method is provided, where the method is applied to a router, and the method includes: receiving a first packet from a second electronic device, where the first packet includes a first field; and sending the first packet to a first electronic device, where the first field is used by the first electronic device to determine a first parameter, and the first parameter indicates a distance between the second electronic device and the router.

For example, the first field is a received signal strength indicator (received signal strength indicator, RSSI) field. Before sending the first packet, the second electronic device may add an RSSI field to the first packet. The router may forward, to the first electronic device, the first packet that carries the first field.

According to the foregoing solution, the router sends, to the first electronic device, the first packet that carries the first field, so that the first electronic device can determine the distance between the second electronic device and the router based on the first field in the first packet, to subsequently determine a specific manner of establishing a signaling connection, improve a success rate of establishing signaling, and avoid a waste of resources.

With reference to the fifth aspect, in some implementations of the fifth aspect, the first packet further includes a second field, the second field is used by the first electronic device to determine a second parameter, and the second parameter indicates a distance between the router and the first electronic device.

It should be noted that the first packet forwarded by the router to the first electronic device may further carry the second field that indicates signal strength of the router, and the second field may be an RSSI field.

For example, the first field may be carried at a tail of the first packet, and the second field may be carried at a header of the first packet.

According to the foregoing solution, the router sends, to the first electronic device, the first packet that carries the second field, so that the first electronic device can determine the distance between the first electronic device and the router based on the second field for sending the first packet, to subsequently determine a specific manner of establishing a signaling connection, improve a success rate of establishing signaling, and avoid a waste of resources.

With reference to the fifth aspect, in some implementations of the fifth aspect, the first packet is a feedback packet of a discovery packet.

With reference to the fifth aspect, in some implementations of the fifth aspect, the first field is a received signal strength indicator RSSI field.

According to a sixth aspect, a communication apparatus is provided, where the apparatus is carried in a first electronic device, and the apparatus includes: a transceiver unit, configured to receive a first packet from a second electronic device via a router, where the first packet includes a first field, and the first field indicates signal strength of the second electronic device; and a processing unit, configured to determine a first parameter based on the first field, where the first parameter indicates a distance between the second electronic device and the router.

With reference to the sixth aspect, in some implementations of the sixth aspect, the first packet further includes a second field, the second field indicates signal strength of the router, and the processing unit is further configured to determine a second parameter based on the second field, where the second parameter indicates a distance between the router and the apparatus.

With reference to the sixth aspect, in some implementations of the sixth aspect, the processing unit is further configured to: when the first parameter and the second parameter meet a first preset condition, establish a signaling connection to the second electronic device through a local area network.

With reference to the sixth aspect, in some implementations of the sixth aspect, the first packet is a feedback packet of a discovery packet.

With reference to the sixth aspect, in some implementations of the sixth aspect, the first field is a received signal strength indicator RSSI field.

With reference to the sixth aspect, in some implementations of the sixth aspect, the processing unit is further configured to obtain a third parameter, where the third parameter indicates a distance between the apparatus and the second electronic device; and the processing unit is further configured to: when the third parameter meets a second preset condition, establish a data connection to the second electronic device in a point-to-point manner.

With reference to the sixth aspect, in some implementations of the sixth aspect, the transceiver unit is specifically configured to obtain the third parameter based on one of the following: a Bluetooth signal, an ultrasonic signal, a radio carrier communication technology UWB technology, and near field communication NFC.

According to a seventh aspect, a communication apparatus is provided, where the apparatus is carried in a first electronic device, the apparatus and a second electronic device discover each other, and the apparatus includes: a transceiver unit, configured to send a second packet to the second electronic device; and further configured to receive, from the second electronic device, a feedback packet of the second packet; and a processing unit, configured to: when a round-trip time RTT of the second packet meets a first preset condition, establish a signaling connection to the second electronic device through a local area network.

With reference to the seventh aspect, in some implementations of the seventh aspect, the transceiver unit is specifically configured to receive a third packet from the second electronic device; the processing unit is further configured to determine an unicast address of the second electronic device based on the third packet; and the transceiver unit is further configured to send the second packet to the second electronic device based on the unicast address of the second electronic device.

With reference to the seventh aspect, in some implementations of the seventh aspect, the third packet is a feedback packet of a discovery packet.

With reference to the seventh aspect, in some implementations of the seventh aspect, the transceiver unit is further configured to obtain a third parameter, where the third parameter indicates a distance between the apparatus and the second electronic device; and the processing unit is further configured to: when the third parameter meets a second preset condition, establish a data connection to the second electronic device in a point-to-point manner.

With reference to the seventh aspect, in some implementations of the seventh aspect, the transceiver unit is specifically configured to obtain the third parameter based on one of the following: a Bluetooth signal, an ultrasonic signal, a radio carrier communication technology UWB technology, and near field communication NFC.

According to an eighth aspect, a communication apparatus is provided, where the apparatus is carried in a second electronic device, and the apparatus includes: a processing unit, configured to determine a first packet, where the first packet includes a first field; and a transceiver unit, configured to send the first packet to a first electronic device via a router, where the first field is used by the first electronic device to determine a first parameter, and the first parameter indicates a distance between the apparatus and the router.

With reference to the eighth aspect, in some implementations of the eighth aspect, the processing unit is further configured to establish a signaling connection to the first electronic device through a local area network, where a distance between the first electronic device and the router is a second parameter, and the first parameter and the second parameter meet a first preset condition.

With reference to the eighth aspect, in some implementations of the eighth aspect, the first packet is a feedback packet of a discovery packet.

With reference to the eighth aspect, in some implementations of the eighth aspect, the first field is a received signal indicator RSSI field.

With reference to the eighth aspect, in some implementations of the eighth aspect, the processing unit is further configured to: when a third parameter meets a second preset condition, establish a data connection to the first electronic device in a point-to-point manner, where the third parameter indicates a distance between the apparatus and the first electronic device.

According to a ninth aspect, a communication apparatus is provided, where the apparatus is carried in a second electronic device, the apparatus and a first electronic device discover each other, and the apparatus includes: a transceiver unit, configured to receive a second packet from the first electronic device, where the transceiver unit is further configured to send a feedback packet of the second packet to the first electronic device; and a processing unit, configured to: when a round-trip time RTT of the second packet meets a first preset condition, establish a signaling connection to the first electronic device through a local area network.

With reference to the ninth aspect, in some implementations of the ninth aspect, the transceiver unit is specifically configured to send a third packet to the first electronic device, where the third packet is used by the first electronic device to determine an unicast address of the apparatus; and the transceiver unit is further configured to receive the second packet from the first electronic device based on the unicast address of the apparatus.

With reference to the ninth aspect, in some implementations of the ninth aspect, the third packet is a feedback packet of a discovery packet.

With reference to the ninth aspect, in some implementations of the ninth aspect, the processing unit is further configured to: when a third parameter meets a second preset condition, establish a data connection to the first electronic device in a point-to-point manner, where the third parameter indicates a distance between the apparatus and the first electronic device.

According to a tenth aspect, a communication apparatus is provided, where the apparatus is carried in a router, and the apparatus includes: a transceiver unit, configured to receive a first packet from a second electronic device, where the first packet includes a first field. The transceiver unit is further configured to send the first packet to a first electronic device, where the first field is used by the first electronic device to determine a first parameter, and the first parameter indicates a distance between the second electronic device and the apparatus.

With reference to the tenth aspect, in some implementations of the tenth aspect, the first packet further includes a second field, the second field is used by the first electronic device to determine a second parameter, and the second parameter indicates a distance between the apparatus and the first electronic device.

With reference to the tenth aspect, in some implementations of the tenth aspect, the first packet is a feedback packet of a discovery packet.

With reference to the tenth aspect, in some implementations of the tenth aspect, the first field is a received signal strength indicator RSSI field.

According to an eleventh aspect, a communication system is provided, including the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, or the first electronic device, the second electronic device, and the router in the method according to any one of the fifth aspect and the possible implementations of the fifth aspect.

According to a twelfth aspect, a computer-readable storage medium is provided. The computer-readable storage medium stores a computer program. When the computer program is executed by a computer, the computer is enabled to perform the method according to any one of the first aspect and the possible implementations of the first aspect, perform the method according to any one of the second aspect and the possible implementations of the second aspect, perform the method according to any one of the third aspect and the possible implementations of the third aspect, perform the method according to any one of the fourth aspect and the possible implementations of the fourth aspect, or perform the method according to any one of the fifth aspect and the possible implementations of the fifth aspect.

According to a thirteenth aspect, a computer program product including instructions is provided. When the computer program product runs on a computer, the computer is enabled to perform the method according to any one of the first aspect and the possible implementations of the first aspect, perform the method according to any one of the second aspect and the possible implementations of the second aspect, perform the method according to any one of the third aspect and the possible implementations of the third aspect, perform the method according to any one of the fourth aspect and the possible implementations of the fourth aspect, or perform the method according to any one of the fifth aspect and the possible implementations of the fifth aspect.

According to a fourteenth aspect, a chip is provided, where the chip includes a processor and a data interface, and the processor reads, through the data interface, instructions stored in a memory, to perform the method according to any one of the first aspect and the possible implementations of the first aspect, perform the method according to any one of the second aspect and the possible implementations of the second aspect, perform the method according to any one of the third aspect and the possible implementations of the third aspect, perform the method according to any one of the fourth aspect and the possible implementations of the fourth aspect, or perform the method according to any one of the fifth aspect and the possible implementations of the fifth aspect.

With reference to the fourteenth aspect, in a possible implementation, the processor is coupled to the memory through an interface.

With reference to the fourteenth aspect, in a possible implementation, the chip system further includes a memory, and the memory stores a computer program or computer instructions.

### BRIEF DESCRIPTION OF DRAWINGS

FIG. 1 is a diagram of a communication system to which a communication method according to an embodiment of this application is applicable;
FIG. 2 is a diagram of a system architecture according to an embodiment of this application;
FIG. 3 is a schematic flowchart of a communication method according to an embodiment of this application;
FIG. 4 is a schematic flowchart of a communication method according to an embodiment of this application; and
FIG. 5 is a block diagram of a device according to an embodiment of this application.

### DESCRIPTION OF EMBODIMENTS

The following describes technical solutions of this application with reference to accompanying drawings.

First, technical terms that may be used in embodiments of this application are described.

### Wi-Fi peer-to-peer (Wi-Fi P2P):

Wi-Fi P2P is a Wi-Fi-based technology launched by the Wi-Fi Alliance, and can enable direct connection between electronic devices. One-to-one or one-to-many communication can be performed without a local area network or an access point (access point, AP). In embodiments of this application, Wi-Fi P2P may also be referred to as P2P for short.

### Access point (access point, AP):

A wireless local area network (wireless local area network, WLAN) system may include an AP, and an electronic device may access an external network by using the AP. For example, the AP may be a router.

### Station (station, STA):

A WLAN system may include a STA. The STA may be associated with an AP, and access a network by using the AP. For example, the STA may be an electronic device like a mobile phone terminal or a tablet computer.

### Huawei magneto link (Huawei magneto link, HML):

The Huawei magneto link is a solution that is more optimized than P2P, and can support one electronic device in establishing a plurality of connections to a plurality of electronic devices.

### Dynamic host configuration protocol (dynamic host configuration protocol, DHCP):

The dynamic host configuration protocol is a network protocol used in an Internet Protocol (Internet Protocol, IP) network, is located at an application layer of an open system interconnection (open system interconnection, OSI) model, may be used by an intranet or a network service provider to automatically allocate an IP address to a user, and may be further used by an intranet administrator to perform central management on all computers.

### Address resolution protocol (address resolution protocol, ARP):

The address resolution protocol is a protocol used to obtain a physical address based on an IP address. When sending information, a host may broadcast an ARP request including a destination IP address to all hosts in a local area network, and receives a returned message, to determine a physical address of the target. After receiving the returned message, the host stores the IP address and the physical address in a local ARP cache, and retains the IP address and the physical address for a period of time. During a next time of requesting, the host may directly query the ARP cache to save resources. The address resolution protocol is established based on mutual trust between hosts in a network. Hosts in a local area network can independently send ARP reply messages. After receiving a reply packet, another host does not check authenticity of the packet and record the packet in a local ARP cache. In this case, an attacker can send a bogus ARP reply packet to a host. As a result, information sent by the host cannot reach an expected host or reaches an incorrect host. This constitutes ARP spoofing. An ARP command may be used to query for a correspondence between an IP address and a media access control (media access control, MAC) address in the local ARP cache, add or delete a static correspondence, or the like.

When electronic devices in a distributed service are located in a local area network, the electronic devices may communicate with each other through router forwarding. Further, in a near field communication scenario, electronic devices may further communicate with each other in a point-to-point manner similar to a Wi-Fi P2P technology. This communication technology has a high transmission rate and may not depend on a local area network. A current distributed service may implement functions such as file sharing and screen projection by using this technology.

Before the electronic device performs service transmission through router forwarding or in a point-to-point manner, a plurality of electronic devices need to discover each other, and establish a signaling connection. In a current distributed service, electronic devices usually discover each other based on a Wi-Fi or Bluetooth technology. Generally, when electronic devices discover each other, surrounding electronic devices need to be searched for, including local area network search and non-local area network search. A search medium of the local area network is a constrained application protocol (constrained application protocol, CoAP) medium, and a search medium of the non-local area network is a Bluetooth low energy (Bluetooth low energy, BLE) medium. Rates of searching by using different media are different. A rate of searching for a surrounding area by using the CoAP medium is high, and a rate of searching for a surrounding area by using the non-local area network BLE medium is low.

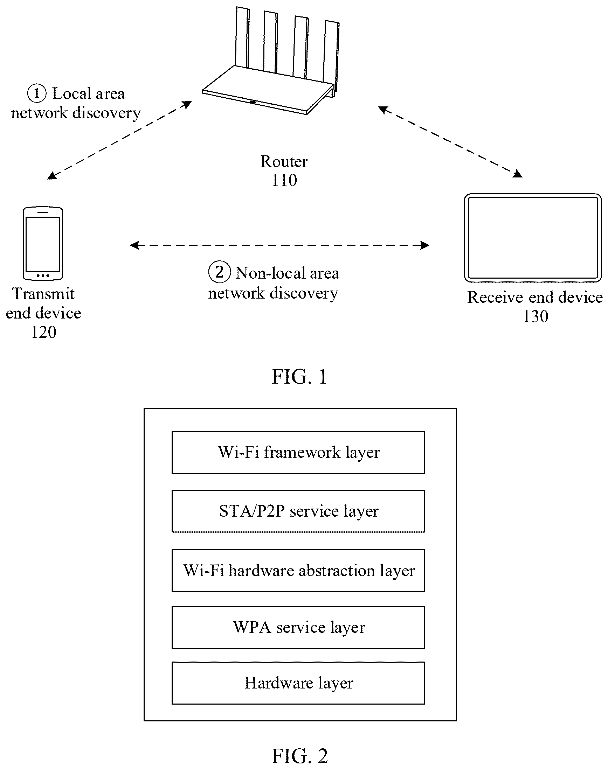

FIG. 1 is a diagram of a communication system to which a communication method according to this application is applicable. The communication system may include a router 110, a transmit end device 120, and a receive end device 130. The transmit end device may be understood as a device that initiates a discovery process and a device that broadcasts a discovery packet, for example, the mobile phone terminal shown in FIG. 1. The receive end device may be understood as a device that unicasts a feedback packet of a discovery packet, for example, the tablet computer shown in FIG. 1. FIG. 1 shows two discovery processes, including a local area network discovery process and a non-local area network discovery process. In the local area network discovery process, a discovery packet or a feedback packet of the discovery packet may be forwarded via the router.

When sending the discovery packet, the transmit end device may send the discovery packet by using both a CoAP medium and a BLE medium, that is, may trigger both the local area network discovery process and the non-local area network discovery process. However, because a discovery delay of the CoAP medium is low, the transmit end device first receives the feedback packet of the discovery packet returned by the receive end device by using the CoAP medium. In other words, although the transmit end device sends the discovery packet by using both the foregoing two media, the transmit end device first discovers the receive end device that returns the packet by using the CoAP medium. After the transmit end device and the receive end device discover each other, a signaling connection further needs to be established. Generally, the signaling connection may also be established by using the CoAP or Bluetooth.

Establishing a signaling connection by using the CoAP is usually limited by a distance between the transmit end device and the router, a distance between the receive end device and the router, or signal strength. Although discovery between the transmit end device and the receive end device can be quickly implemented by using the CoAP medium, if a distance between the transmit end device and the router is long, or a distance between the receive end device and the router is long, a signaling connection cannot be established between the transmit end device and the receive end device by using the CoAP. Alternatively, even if a signaling connection is established between the transmit end device and the receive end device by using the CoAP, the signaling connection established between the transmit end device and the receive end device by using the CoAP may be easily disconnected and unstable because signal strength between the transmit end device and the router is low or signal strength between the receive end device and the router is low.

However, a delay of establishing a signaling connection by using Bluetooth is large, and Bluetooth cannot be used each time a signaling connection is established. This is because the electronic device needs to implement many functions by using Bluetooth, for example, headset pairing, calling, file sharing, and collaboration. These functions share a Bluetooth short-range connection capability. When there are too many networking devices and a plurality of services request Bluetooth connections, Bluetooth short-distance transmission may reject a request for establishing a signaling connection for a distributed service based on resource usage. As a result, the signaling connection fails to be established by using Bluetooth.

Each time a signaling connection is established, a redundant communication manner may be used. In other words, the foregoing two media (including the CoAP medium and the Bluetooth medium) are used to attempt to establish the signaling connection. This manner causes high upper-layer logic responsibility and causes a waste of power consumption. In addition, establishing a signaling connection may cause disorder of a bottom-layer state, resulting in a signaling connection establishment failure.

In a local area network scenario, if a signaling connection is successfully established between a transmit end device and a receive end device by using a CoAP, service transmission may be performed in a point-to-point manner or through router forwarding.

Before service transmission is performed through router forwarding, both the transmit end device and the receive end device need to be connected to a router. For example, when a trust domain of the receive end device is different from that of the router, the receive end device cannot be connected to the router. In addition, because an architecture of the router does not have an independent network processor (network processor, NP) forwarding chip, a data packet needs to be sent to a central processing unit (central processing unit, CPU) for processing. Therefore, a large quantity of CPU resources need to be occupied to process data that should be processed at a NP layer, and the CPU is too busy. In addition, in each service interaction process, air interface contention needs to be performed twice, resulting in performance deterioration in terms of efficiency. The point-to-point manner can meet a requirement of a high-rate transmission service or a high-reliability transmission service. Therefore, after the signaling connection is successfully established between the transmit end device and the receive end device, the point-to-point manner may be preferentially selected for service transmission. However, if the point-to-point manner is selected for service transmission, a specific condition needs to be met.

That the signaling connection can be successfully established between the transmit end device and the receive end device by using the CoAP may indicate that the distance between the transmit end device and the router and the distance between the receive end device and the router meet a condition for establishing the signaling connection by using the CoAP. However, the distance between the transmit end device and the receive end device may be long, and consequently, a point-to-point high-speed Wi-Fi service connection cannot be established.

Therefore, this application provides a communication method and a communication apparatus. In a local area network scenario, before establishing a signaling connection to a receive end device, a transmit end device determines an appropriate signaling connection establishment manner, to improve a success rate of establishing a signaling connection. In addition, after the signaling connection is established, whether a distance between the transmit end device and the receive end device meets a condition of a high-speed Wi-Fi service connection is determined, to improve a success rate of establishing a point-to-point connection, and improve service experience in a local area network.

FIG. 2 is a diagram of a system architecture according to this application. The system architecture may be carried in the transmit end device, for example, an electronic device such as a mobile phone terminal or a tablet computer. The system structure includes a Wi-Fi framework layer, a STA/P2P service layer, a Wi-Fi hardware abstraction layer, a WPA service layer, and a hardware layer. The Wi-Fi framework (framework, FWK) layer is an external application programming interface (application programming interface, API) interface layer, and a system application and a third-party application may access information at an underlying service layer through the interface. The STA/P2P service layer is used to manage a STA service and a P2P service, is a service layer for operating a bottom layer, and may perform upper-layer encapsulation on related information such as a protocol status. For example, the transmit end device includes two types of interfaces. One type of interface is used to connect to a router (AP) when the transmit end device is a STA. The other type of interface is used to connect to another electronic device when the transmit end device is used as one electronic device in a point-to-point communication manner. The Wi-Fi hardware abstraction layer (hardware abstraction layer, HAL) may provide an interface for an upper layer, and interact with a Wi-Fi protected access (Wi-Fi protected access, WPA) service layer. The WPA service layer (WPA supplicant) is a layer of service at the Wi-Fi hardware abstraction layer, and is a basic service used to operate hardware. The hardware layer may include a radio frequency front end and a hardware chip.

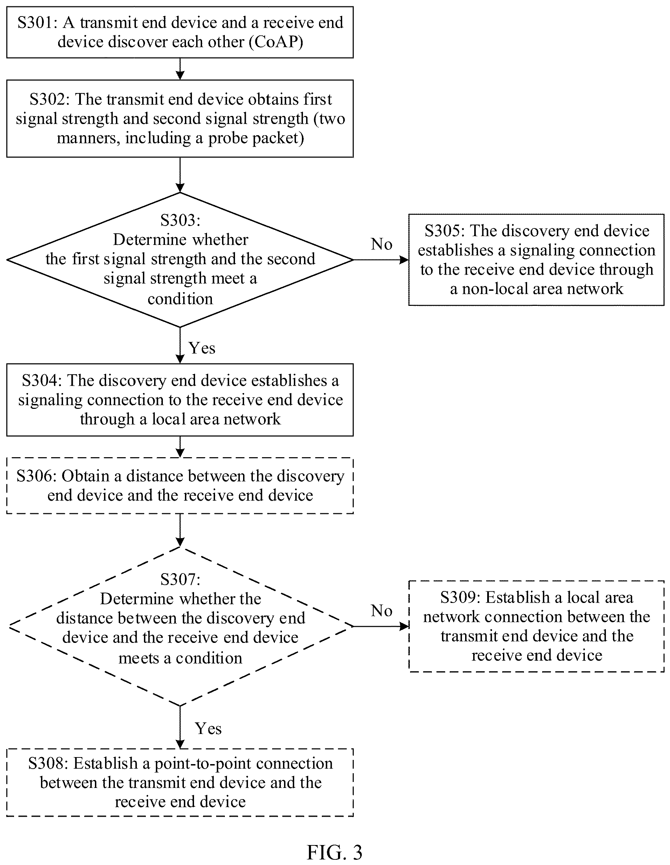

FIG. 3 shows a communication method according to an embodiment of this application. The method may be applied to the communication system shown in FIG. 1 in a local area network scenario. The following specifically describes the method.

S301: A transmit end device and a receive end device discover each other.

For example, the transmit end device may be the mobile phone terminal shown in FIG. 1, and the receive end device may be the tablet computer shown in FIG. 1. The transmit end device may be understood as a device that initiates a discovery process, and may broadcast a discovery packet. The receive end device may receive the discovery packet, and return a feedback packet of the discovery packet.

It should be noted that, in a local area network scenario, the transmit end device may send the discovery packet by using a CoAP medium and a BLE medium. In other words, the transmit end device and the receive end device may discover each other through a local area network or a non-local area network. In a process of implementing discovery by using the CoAP medium or the local area network, a packet transmitted between the transmit end device and the receive end device needs to be forwarded via a router. In a process of implementing discovery by using the BLE medium or the non-local area network, a packet may be directly transmitted between the transmit end device and the receive end device.

It should be noted that, because a delay of discovery by using the CoAP medium is low, and a packet transmission rate is high, the transmit end device usually first discovers the receive end device by using the CoAP medium.

Specifically, a process of implementing mutual discovery between the transmit end device and the receive end device by using the CoAP medium includes: The transmit end device broadcasts the discovery packet to surrounding devices, where the receive end device is a surrounding device. The discovery packet broadcast by the transmit end device may be forwarded by the router to the receive end device. The receive end device returns the feedback packet of the discovery packet in an unicast manner, and the feedback packet of the discovery packet may be forwarded by the router to the receive end device.

It should be noted that the feedback packet that is of the discovery packet and that is fed back by the receive end device needs to pass through two communication paths, including a path between the receive end device and the router and a path between the router and the transmit end device. A packet transmitted by the receive end device to the router is a response packet 1, and a packet transmitted by the router to the transmit end device is a response packet 2. The response packet 2 may be understood as the response packet 1 forwarded by the router. After the transmit end device receives the response packet from the receive end device, it indicates that the transmit end device and the receive end device discover each other, a discovery process is completed, and a signaling connection needs to be further established between the transmit end device and the receive end device.

It can be learned from the foregoing that the signaling connection established by using the CoAP medium is usually limited by a distance between devices, for example, a distance between the transmit end device and the router, and a distance between the receive end device and the router. Therefore, after the transmit end device and the receive end device discover each other, if a path between the devices meets a condition, a signaling connection between the devices may be established by using the CoAP medium.

S302: The transmit end device obtains first signal strength and second signal strength.

In an implementation, a signal field, for example, a received signal strength indicator (received signal strength indicator, RSSI) field, may be carried in the response packet 1 and the response packet 2. The RSSI field may be used to reflect signal strength of a device that sends a packet carrying the RSSI field, so that a distance to the device (namely, a distance between two devices in direct communication) can be calculated based on the signal strength. When receiving the response packet, the transmit end device may obtain the first signal strength and the second signal strength based on the RSSI in the response packet. The first signal strength may be signal strength of the receive end device, and the second signal strength may be signal strength of the router. The transmit end device may calculate the distance between the receive end device and the router based on the first signal strength, and calculate the distance between the router and the transmit end device based on the second signal strength.

For ease of understanding, Table 1 shows a packet structure of the response packet.

**Table 1 Packet structure**

| Type | Field length/Byte | Remarks |
|---|---|---|
| Device ID (device ID) | 6 | Unique identifier of a local device, where a unique device identifier (unique device identifier, UDID) can be used for hashing |
| Device alias (BtName) | 20 | Device alias, which is similar to a Bluetooth alias and can be modified by users |
| Device identity code (device hash) | 20 | Each device generates an independent public key hash of the device, for identity identification during security authentication |
| RSSI field | 1 | Indicates signal strength between a device that sends the packet and a router |

It should be noted that the packet structure shown in Table 1 is used as an example to indicate a packet structure of the response packet sent by the receive end device. An RSSI field is newly added to the packet sent by the receive end device, and the RSSI field indicates signal strength between the receive end device and the router. The transmit end device receives, through forwarding by the router, the response packet sent by the receive end device. The process includes: The receive end device sends the response packet to the router, and the router forwards the response packet to the transmit end device. Before sending the response packet, the receive end device adds, to the response packet, an RSSI field indicating the distance between the receive end device and the router. Before forwarding the response packet to a transmit packet, the router may also add, to the packet, an RSSI field indicating the distance between the router and the transmit end device.

S303: Determine whether the first signal strength and the second signal strength meet a condition.

It should be noted that, in a process in which the transmit end device and the receive end device discover each other by using the CoAP medium, the transmit end device may separately determine the distance between the receive end device and the router and the distance between the router and the transmit end device based on the RSSI field in the response packet of the receive end device. In other words, it is determined whether the signal strength indicated by the RSSI field meets the condition. If the condition is met, subsequent step S304 may be performed. If the condition is not met, subsequent step S305 may be performed.

For example, a specific signal level may be obtained through classification based on a value of the RSSI field:
[-126, -88) or [156, 168) indicates 0 signal bars;
[-88, -78) or [168, 178) indicates 1 signal bar;
[-78, -67) or [178, 189) indicates 2 signal bars;
[-67, -55) or [189, 200) indicates 3 signal bars; and
[-55, 0] indicates 4 signal bars.

Generally, 0 to -50 indicate highest signal strength of the device, and -50 to -70 indicate a signal strength deviation of the device, where a value less than -70 indicates that the signal strength of the device is poor, which may lead to connection failure or disconnection, and -200 indicates that the device has been disconnected from a Wi-Fi network.

It should be noted that, in addition to adding the RSSI field that indicates the signal strength of the device to the response packet described above, whether the path between the receive end device and the router and the path between the router and the transmit end device meet the condition may be further determined based on a probe packet.

In an implementation, the transmit end device and the receive end device discover each other by using the CoAP medium. After the transmit end device receives the response packet sent by the receive end device, the transmit end device obtains an unicast address of the receive end based on the response packet unicast by the receive end. The transmit end device sends a probe packet to the receive end device based on the unicast address, and receives a feedback packet of the probe packet from the receive end device. The transmit end device determines, based on a round-trip time (round-trip time, RTT) of the probe packet, whether the path between the receive end device and the router and the path between the router and the transmit end device meet the condition. It should be noted that the probe packet is transmitted between the transmit end device and the receive end device, and the feedback packet of the probe packet needs to be forwarded via a router. Therefore, the RTT may reflect a communication status of a channel between the transmit end device and the router and a communication status of a channel between the router and the receive end device. The probe packet may be a probe packet of an internet control message protocol (internet control message protocol, ICMP).

For example, if the probe packet meets an experiential delay, subsequent step S304 may be performed, that is, a CoAP signaling connection is preferentially established. If the probe packet does not meet an experiential delay, subsequent step S305 may be performed.

It should be noted that, for a probe packet, a delay of a reliable connection is usually at a millisecond level. If the delay of the probe packet reaches hundreds of milliseconds, or the delay reaches seconds, it indicates that availability of the path is moderate. Optionally, after the probe packet is returned, a related log may be recorded.

S304: The transmit end device establishes a signaling connection to the receive end device through a local area network.

S305: The transmit end device establishes a signaling connection to the receive end device through a non-local area network.

For example, when determining, based on the RSSI field in the response packet, that the first signal strength and the second signal strength meet the condition, the transmit end device may establish the signaling connection to the receive end device through the local area network (for example, a CoAP).

It should be noted that, that the first signal strength meets the condition indicates that the signal strength of the receive end device meets the condition. In other words, the distance between the receive end device and the router meets the condition. If the second signal strength meets the condition, it indicates that the signal strength of the router meets the condition. In other words, the distance between the router and the transmit end device meets the condition. In other words, when the distance between the receive end device and the router meets the condition, and the distance between the router and the transmit end device meets the condition, the transmit end device and the receive end device may establish the signaling connection through the local area network.

For example, when determining, based on the delay of the probe packet, that the condition is met, the transmit end device may establish the signaling connection to the receive end device through the local area network.

For example, when determining, based on the RSSI field, that the first signal strength or the second signal strength does not meet the condition, or the delay of the probe packet does not meet the condition, the transmit end device may establish the signaling connection to the receive end device through the non-local area network. For example, the signaling connection is established by using the BLE medium.

Optionally, if the delay of the probe packet reaches hundreds of milliseconds or seconds, the feedback packet in the process of mutual discovery by using the BLE medium is received by the transmit end device. In this case, the transmit end device may determine to establish the signaling connection to the receive end device by using the Bluetooth medium without waiting for the probe packet to be returned.

Further, after the signaling connection is established between the transmit end device and the receive end device through the local area network, service transmission may be performed between the transmit end device and the receive end device in the point-to-point communication manner with a high transmission rate. To ensure a success rate of point-to-point transmission between the transmit end device and the receive end device, it further needs to be determined whether the transmit end device and the receive end device currently meet a condition of point-to-point service transmission.

Optionally, S306: Obtain a distance between the transmit end device and the receive end device.

Optionally, S307: Determine whether the distance between the transmit end device and the receive end device meets a condition.

For example, in a high-speed Wi-Fi connection establishment phase, the distance between the transmit end device and the receive end device may be determined in any one of manners such as a Bluetooth signal, an ultrasonic signal, a radio carrier communication technology (ultra wide band, UWB) technology, and near field communication (near field communication, NFC). The Bluetooth signal may include BLE and a basic rate (basic rate, BR).

For example, in the high-speed Wi-Fi connection establishment phase, a Bluetooth signal (Bluetooth RSSI) is detected. If the Bluetooth signal is strong, subsequent step S308 may be performed. If the Bluetooth signal is weak, subsequent step S309 may be performed. When the transmit end device is connected to the receive end device through the local area network, prompt information may be displayed on a user interface of the electronic device, to prompt a user that local area network communication is currently being performed.

It should be noted that the RSSI field may be used to measure a distance, and an approximate distance between the transmit end device and the receive end device may be determined based on a balanced attenuation value of the Bluetooth RSSI. If the distance between the transmit end device and the receive end device is excessively long, it indicates that a near-field point-to-point communication connection is not suitable to be established.

Optionally, S308: Establish a point-to-point connection between the transmit end device and the receive end device.

For example, the point-to-point connection may be Wi-Fi P2P communication or HML communication.

Optionally, S309: Establish a local area network connection between the transmit end device and the receive end device.

It should be noted that, that the local area network connection is established between the transmit end device and the receive end device may be understood as that service transmission between the transmit end device and the receive end device needs to be forwarded via a router.

It should be noted that, in the method 300, whether the signaling connection can be established between the transmit end device and the receive end device through the local area network is determined based on step S301 to step S305, to ensure a success rate of establishing the signaling connection by the electronic device through the local area network as much as possible. Step S306 to step S309 are optional steps. After the signaling connection is established between the transmit end device and the receive end device through the local area network, whether point-to-point service transmission is suitable between the transmit end device and the receive end device may be further determined based on step S306 to step S309, to ensure a success rate of establishing the high-speed Wi-Fi connection.

According to the foregoing solution, in a distributed service scenario, in a mutual discovery phase between electronic devices, it is determined whether it is suitable to establish a signaling connection by using a CoAP, and before service transmission, it is determined whether a point-to-point connection between the devices can be established through high-speed Wi-Fi. In this way, it is ensured as much as possible that the electronic device establishes the signaling connection by using the CoAP and a success rate of establishing the high-speed Wi-Fi connection, to improve experience of the distributed service.

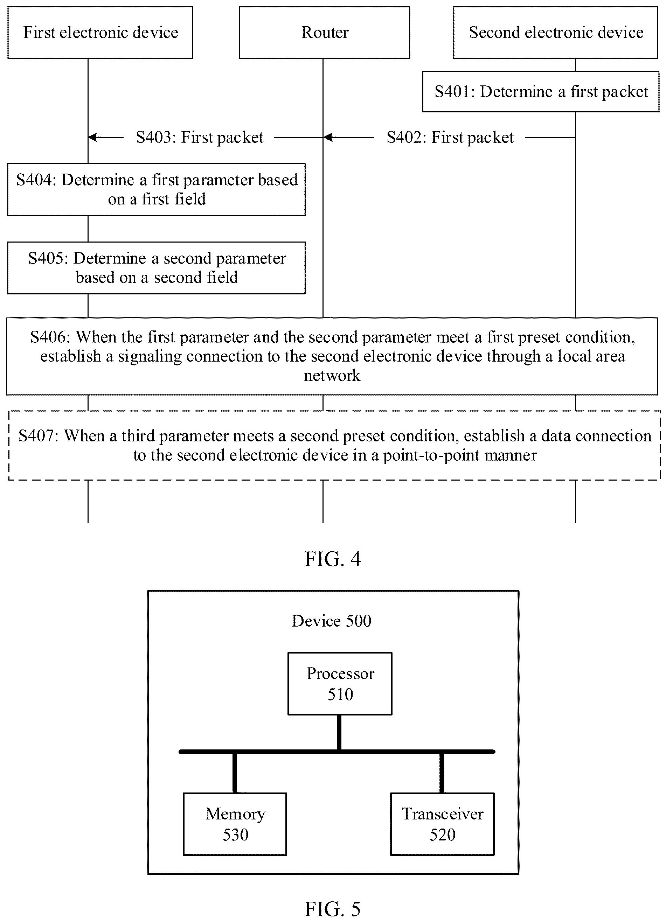

FIG. 4 shows a communication method according to this application. The method may be applied to a communication system. The communication system includes a first electronic device, a second electronic device, and a router. The first electronic device may be understood as the transmit end device, and the second electronic device may be understood as the receive end device. The following describes the method 400 in detail.

S401: The second electronic device determines a first packet.

S402: The second electronic device sends the first packet, and correspondingly, the router receives the first packet.

S403: The router sends the first packet, and correspondingly, the first electronic device receives the first packet.

For example, the first packet is a feedback packet of a discovery packet. Before determining the first packet, the second electronic device receives the discovery packet from the first electronic device. When the first electronic device receives, from the second electronic device, the feedback packet of the discovery packet, the first electronic device and the second electronic device discover each other. The discovery packet of the first electronic device is a broadcast packet, and the first packet (the feedback packet of the discovery packet) is an unicast packet.

It should be noted that, in a local area network scenario, the router needs to be used to forward a packet to implement a mutual discovery process between the first electronic device and the second electronic device by discovering a CoAP medium with a low delay.

It should be understood that the first packet includes a first field, and the first field indicates signal strength of the second electronic device.

For example, the first field is an RSSI field. Before sending the first packet, the second electronic device may add an RSSI field to the first packet. A field structure of the first packet may be shown in the foregoing Table 1. Details are not described herein again.

S404: The first electronic device determines a first parameter based on the first field.

It should be understood that the first parameter indicates a distance between the second electronic device and the router. The RSSI field is newly added to the first packet from the second electronic device, and the first electronic device may calculate the distance between the second electronic device and the router based on the signal strength that is of the second electronic device and that is indicated by the RSSI field.

S405: The first electronic device determines a second parameter based on a second field.

It should be understood that the first packet further includes the second field, and the second field indicates signal strength of the router. The first electronic device determines the second parameter based on the second field in the first packet, where the second parameter indicates a distance between the router and the first electronic device.

It should be noted that the first packet received by the first electronic device is forwarded via the router, and before the router forwards the first packet to the first electronic device, the second field may be carried in the first packet, where the second field may be an RSSI field. The first electronic device may calculate the distance between the router and the first electronic device based on the signal strength that is of the router and that is indicated by the RSSI field.

For example, the first field may be carried at a tail of the first packet, and the second field may be carried at a header of the first packet.

S406: When the first parameter and the second parameter meet a first preset condition, the first electronic device establishes a signaling connection to the second electronic device through a local area network.

For example, the first preset condition may be understood as that a distance that is between devices and that is indicated by a parameter meets a condition for establishing a signaling connection through a local area network.

It should be noted that, before the first electronic device establishes the signaling connection to the second electronic device through the local area network, it needs to be first determined whether each communication link for establishing the signaling connection through the local area network meets a condition for establishing a signaling connection. The first electronic device determines whether the distance indicated by the first parameter and the distance indicated by the second parameter meet the condition for establishing the signaling connection through the local area network. In other words, the first electronic device determines whether a path between the first electronic device and the router and a path between the router and the second electronic device meet the condition for establishing the signaling connection through the local area network.

In other words, when the signal strength of the second electronic device and the signal strength of the router meet the condition for establishing the signaling connection through the local area network, the signaling connection to the second electronic device may be established through the local area network.

Generally, when the distance indicated by the first parameter is close enough to the distance indicated by the second parameter, the first electronic device and the second electronic device are suitable to establish the signaling connection through the local area network.

In an implementation, when the first parameter or the second parameter does not meet the first preset condition, a signaling connection to the second electronic device is established through a non-local area network.

Generally, when either of the distance indicated by the first parameter or the distance indicated by the second parameter is long, the first electronic device may fail to establish the signaling connection to the second electronic device through the local area network. The first electronic device may attempt to establish the signaling connection to the second electronic device through the non-local area network, for example, establish a signaling connection by using a BLE medium.

It should be noted that the foregoing describes determining the first parameter and the second parameter based on the first field and the second field in the first packet, and when the first parameter and the second parameter meet the first preset condition, the first electronic device may establish the signaling connection to the second electronic device through the local area network. In addition, after the first electronic device and the second electronic device discover each other, whether the signaling connection can be established through the local area network may be further determined based on the probe packet.

Specifically, the first electronic device sends the second packet to the second electronic device, and receives a feedback packet of the second packet from the second electronic device. When an RTT of the second packet meets the first preset condition, the first electronic device establishes the signaling connection to the second electronic device through the local area network.

For example, the second packet is a probe packet.

Specifically, the first electronic device receives a third packet from the second electronic device, determines an unicast address of the second electronic device based on the third packet, and sends the second packet to the second electronic device based on the unicast address of the second electronic device.

For example, the third packet is the feedback packet of the discovery packet, and the third packet is an unicast packet.

It should be noted that, after the first electronic device and the second electronic device discover each other, the first electronic device may determine the unicast address of the second electronic device based on the feedback packet of the discovery packet unicast by the second electronic device, unicast the probe packet to the second electronic device based on the unicast address of the second electronic device, and receive the feedback packet that is of the probe packet and that is sent by the second electronic device. The first electronic device determines, based on an RTT of the probe packet, whether a path between the second electronic device and the router and a path between the router and the first electronic device meet a condition. It should be noted that the probe packet is transmitted between the first electronic device and the second electronic device, and the feedback packet of the probe packet needs to be forwarded via the router. Therefore, the RTT may reflect a communication status of the channel between the first electronic device and the router and a communication status of the channel between the router and the second electronic device.

If the RTT of the probe packet is low and an experiential delay is met, the first electronic device may establish the signaling connection to the second electronic device through the local area network. If the RTT of the probe packet is high and an experiential delay is not met, the first electronic device may establish the signaling connection to the second electronic device through the non-local area network.

Optionally, S407: When a third parameter meets a second preset condition, the first electronic device establishes a data connection to the second electronic device in a point-to-point manner.

For example, the second preset condition may be understood as that a distance that is between devices and that is indicated by a parameter meets a condition for establishing a signaling data connection in a point-to-point manner.

For example, after the first electronic device establishes the signaling connection to the second electronic device through the local area network, the first electronic device may obtain the third parameter. Before the first electronic device establishes the data connection to the second electronic device in the point-to-point manner, it needs to be determined whether the third parameter meets the second preset condition. The third parameter indicates a distance between the first electronic device and the second electronic device.

It should be noted that, after establishing the signaling connection to the second electronic device through the local area network, the first electronic device first determines whether a communication link between the first electronic device and the second electronic device meets a condition for point-to-point service transmission, and if the communication link meets the condition, establishes the data connection in the point-to-point manner.

It should be understood that, when the first electronic device establishes the signaling connection to the second electronic device through the local area network, it indicates that the distance between the first electronic device and the router, and the distance between the router and the second electronic device are close enough. However, the distance between the first electronic device and the second electronic device affects the success rate of establishing the data connection in the point-to-point manner. Therefore, it needs to be determined in advance whether the distance between the first electronic device and the second electronic device meets the condition of establishing the data connection in the point-to-point manner.

Specifically, the first electronic device may obtain the third parameter in one of the following manners: a Bluetooth signal, an ultrasonic signal, UWB, and NFC.

For example, the distance between the first electronic device and the second electronic device is determined based on a balance attenuation value of a Bluetooth RSSI. If the distance is excessively long, it indicates that the near-field point-to-point data connection is not suitable for establishment.

For example, the point-to-point communication manner includes Wi-Fi P2P communication or HML communication.

It should be noted that service transmission may be directly performed between the first electronic device and the second electronic device that establish the data connection in the point-to-point manner. In this transmission manner, a transmission rate is high, and transmission efficiency is high.

In an implementation, when the third parameter does not meet the second preset condition, the first electronic device establishes the data connection to the second electronic device through the local area network.

For example, a service or data transmitted between the first electronic device and the second electronic device needs to be forwarded via the router.

It should be noted that, in the method 400, whether the signaling connection can be established between the first electronic device and the second electronic device through the local area network is determined based on step S401 to step S406, to ensure a success rate of establishing the signaling connection by the electronic device through the local area network as much as possible. Step S407 is an optional step. After the signaling connection is established between the first electronic device and the second electronic device through the local area network, whether point-to-point service transmission is suitable between the first electronic device and the second electronic device may be further determined based on step S407, to ensure a success rate of establishing the high-speed Wi-Fi connection.

According to the foregoing solution, in a distributed service scenario, in a mutual discovery phase between electronic devices, it is determined whether it is suitable to establish a signaling connection through a local area network, and before service transmission, it is determined whether a point-to-point connection between the devices can be established through high-speed Wi-Fi. In this way, it is ensured as much as possible that the electronic device establishes the signaling connection through the local area network and a success rate of establishing the high-speed Wi-Fi connection, to improve experience of the distributed service.

FIG. 5 is a block diagram of a device according to an embodiment of this application. The device may be the first electronic device or the second electronic device described above. The device 500 shown in FIG. 5 includes a processor 510, a transceiver 520, and a memory 530. The processor 510, the transceiver 520, and the memory 530 are connected through an internal connection path. The memory 530 is configured to store a program. The processor 510 is configured to execute the program stored in the memory 530, so that the transceiver 520 receives/sends a packet. Optionally, the memory 530 may be coupled to the processor 510 through an interface, or may be integrated with the processor 510.

It should be noted that the transceiver 520 may include but is not limited to a transceiver apparatus like an input/output interface (input/output interface), to implement communication between devices.

During an implementation process, steps in the foregoing methods may be completed by using an integrated logic circuit of hardware in the processor 510 or an instruction in software form. The method disclosed with reference to embodiments of this application may be directly performed by a hardware processor, or may be performed by a combination of a software module and hardware in the processor. A software module may be located in a mature storage medium in the art, such as a random access memory, a flash memory, a read-only memory, a programmable read-only memory, an electrically erasable programmable memory, a register, or the like. The storage medium is located in the memory 530, and the processor 510 reads information in the memory 530 and completes the steps in the foregoing methods in combination with hardware of the processor. To avoid repetition, details are not described herein again.

An embodiment of this application provides a computer program product. When the computer program product runs on a device, the device is enabled to perform the technical solutions of the foregoing embodiments. An implementation principle and technical effect of the computer program product are similar to those in the foregoing method-related embodiments. Details are not described herein again.

An embodiment of this application provides a readable storage medium. The readable storage medium includes instructions. When the instructions are run on a device, the device is enabled to perform the technical solutions of the foregoing embodiment. An implementation principle and technical effect of the readable storage medium are similar. Details are not described herein again.

An embodiment of this application provides a chip. The chip is configured to execute instructions. When the chip runs, the technical solutions in the foregoing embodiments are performed. An implementation principle and technical effect of the chip are similar. Details are not described herein again.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing apparatus and units (modules), refer to a corresponding process in the foregoing method embodiments, and details are not described herein again.

In the several embodiments provided in this application, it should be understood that the disclosed device, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer readable storage medium. Based on such an understanding, the technical solutions in embodiments of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first electronic device, and the method comprises:
receiving a first packet from a second electronic device via a router, wherein the first packet comprises a first field, and the first field indicates signal strength of the second electronic device; and
determining a first parameter based on the first field, wherein the first parameter indicates a distance between the second electronic device and the router.

2. The method according to claim 1, wherein the first packet further comprises a second field, the second field indicates signal strength of the router, and the method further comprises:
determining a second parameter based on the second field, wherein the second parameter indicates a distance between the router and the first electronic device.

3. The method according to claim 2, wherein the method further comprises:
when the first parameter and the second parameter meet a first preset condition, establishing a signaling connection to the second electronic device through a local area network.

4. The method according to any one of claims 1 to 3, wherein the first packet is a feedback packet of a discovery packet.

5. The method according to any one of claims 1 to 4, wherein the first field is a received signal strength indicator RSSI field.

6. A communication method, wherein the method is applied to a first electronic device, the first electronic device and a second electronic device discover each other, and the method comprises:
sending a second packet to the second electronic device;
receiving, from the second electronic device, a feedback packet of the second packet; and
when a round-trip time RTT of the second packet meets a first preset condition, establishing a signaling connection to the second electronic device through a local area network.

7. The method according to claim 6, wherein sending the second packet to the second electronic device comprises:
receiving a third packet from the second electronic device;
determining an unicast address of the second electronic device based on the third packet; and
sending the second packet to the second electronic device based on the unicast address of the second electronic device.

8. The method according to claim 7, wherein the third packet is a feedback packet of a discovery packet.

9. The method according to any one of claims 3 to 5 or claims 6 to 8, wherein the method further comprises:
obtaining a third parameter, wherein the third parameter indicates a distance between the first electronic device and the second electronic device; and
when the third parameter meets a second preset condition, establishing a data connection to the second electronic device in a point-to-point manner.

10. The method according to claim 9, wherein obtaining the third parameter comprises:
obtaining the third parameter based on one of the following:
a Bluetooth signal, an ultrasonic signal, a radio carrier communication technology UWB technology, and near field communication NFC.

11. A communication method, wherein the method is applied to a second electronic device, and the method comprises:
determining a first packet, wherein the first packet comprises a first field; and
sending the first packet to a first electronic device via a router, wherein the first field is used by the first electronic device to determine a first parameter, and the first parameter indicates a distance between the second electronic device and the router.

12. The method according to claim 11, wherein the method further comprises:
establishing a signaling connection to the first electronic device through a local area network, wherein
a distance between the first electronic device and the router is a second parameter, and the first parameter and the second parameter meet a first preset condition.

13. The method according to claim 11 or 12, wherein the first packet is a feedback packet of a discovery packet.

14. The method according to any one of claims 11 to 13, wherein the first field is a received signal indicator RSSI field.

15. A communication method, wherein the method is applied to a second electronic device, the second electronic device and a first electronic device discover each other, and the method comprises:
receiving a second packet from the first electronic device;
sending a feedback packet of the second packet to the first electronic device; and
when a round-trip time RTT of the second packet meets a first preset condition, establishing a signaling connection to the first electronic device through a local area network.

16. The method according to claim 15, wherein receiving the second packet from the first electronic device comprises:
sending a third packet to the first electronic device, wherein the third packet is used by the first electronic device to determine an unicast address of the second electronic device; and
receiving the second packet from the first electronic device based on the unicast address of the second electronic device.

17. The method according to claim 16, wherein the third packet is a feedback packet of a discovery packet.

18. The method according to any one of claims 12 to 14 or claims 15 to 17, wherein the method further comprises:
when a third parameter meets a second preset condition, establishing a data connection to the first electronic device in a point-to-point manner, wherein
the third parameter indicates a distance between the second electronic device and the first electronic device.

19. A communication method, wherein the method is applied to a router, and the method comprises:
receiving a first packet from a second electronic device, wherein the first packet comprises a first field; and
sending the first packet to a first electronic device, wherein the first field is used by the first electronic device to determine a first parameter, and the first parameter indicates a distance between the second electronic device and the router.

20. The method according to claim 19, wherein the first packet further comprises a second field, the second field is used by the first electronic device to determine a second parameter, and the second parameter indicates a distance between the router and the first electronic device.

21. The method according to claim 19 or 20, wherein the first packet is a feedback packet of a discovery packet.

22. The method according to any one of claims 19 to 21, wherein the first field is a received signal strength indicator RSSI field.

23. A communication apparatus, comprising a processor coupled to a memory, wherein the memory is configured to store a computer program, and the processor is configured to run the computer program, so that the communication apparatus performs the method according to any one of claims 1 to 10, 11 to 18, and 19 to 22.

24. The communication apparatus according to claim 23, further comprising one or both of the memory and a transceiver, wherein the transceiver is configured to receive a signal and/or send a signal.

25. A communication system, comprising the first electronic device, the second electronic device, and the router according to any one of claims 1 to 10, 11 to 18, and 19 to 22.

26. A computer-readable storage medium, wherein the computer-readable storage medium stores a computer program, and when the computer program is executed by a computer, the computer is enabled to perform the method according to any one of claims 1 to 10, 11 to 18, and 19 to 22.

27. A computer program product comprising instructions, wherein when the computer program product runs on a computer, the computer is enabled to perform the method according to any one of claims 1 to 10, 11 to 18, and 19 to 22.

28. A chip, wherein the chip comprises a processor and a data interface, and the processor reads, through the data interface, instructions stored in a memory, to perform the method according to any one of claims 1 to 10, 11 to 18, and 19 to 22.
